# EUROPEAN PATENT SPECIFICATION

(11) **EP 1 900 969 B1**
(45) Date of publication and mention of the grant of the patent: **14.10.2009**
(21) Application number: 07115035.3
(22) Date of filing: 27.08.2007
(51) Int. Cl.: F16H 1/06, B62D 5/04

(54) **Reduction Gear Mechanism and Electric Power Steering Apparatus**
Untersetzungsgetriebe-Mechanismus und elektrische Servolenkung
Mécanisme de réduction d'engrenage et appareil à direction assistée électrique

(30) Priority: 14.09.2006 JP 2006249885; 18.06.2007 JP 2007160239
(43) Date of publication of application: 19.03.2008
(73) Proprietor: JTEKT Corporation, Osaka-shi Osaka 542-8502 (JP)
(72) Inventor: Kuroumaru, Yoshikazu, Osaka 542-8502 (JP); Kamatani, Yasuhiro, Osaka 542-8502 (JP); Saruwatari, Takehiro, Osaka 542-8502 (JP); Otsuki, Hidetaka, Osaka 542-8502 (JP); Otsuki, Takumi, Osaka 542-8502 (JP)
(74) Representative: Selting, Günther

(56) References cited:
- WO-A-20/04113006
- GB-A- 2 125 927
- JP-A- 48 044 663
- JP-A- 55 044 129
- JP-A- 60 113 857
- JP-A- 2002 037 100
- US-A- 1 067 144
- US-A- 4 236 448
- US-A1- 2002 148 673

## Description

### BACKGROUND

### 1. Technical Field

The present invention relates to a reduction gear mechanism including a smaller gear and a larger gear, and an electric power steering apparatus comprising the reduction gear mechanism and using an electric motor as a source of steering assist force.

### 2. Description of Related Art

Japanese Patent Application JP55-044129 A discloses a reduction gear mechanism including mutually meshing smaller gear and larger gear with their shafts arranged parallel to each other, comprising means for decreasing a relative speed generated between the smaller gear and the larger gear, said means comprising a resistance section for applying resistance according to transmission torque applied to the smaller gear and larger gear to a relative rotation between the smaller gear and larger gear; wherein means for decreasing a relative speed comprises a first rotor which rotates together with one of the smaller gear and larger gear, and a second rotor which rotates together with the other, so as to generate sliding friction between the first rotor and itself; wherein said means for decreasing a relative speed comprises a third rotor which generates, between one of the first and second rotors and itself, a sliding friction resistance.

An electric power steering apparatus for vehicle is constructed to detect, for example, steering torque applied to an input shaft connected to a steering wheel by the relative rotation between the input shaft and an output shaft connected coaxially to the input shaft through a torsion bar, drive a steering assist electric motor based on the detected torque, etc., and transmit the torque of the electric motor to steering means through a reduction gear mechanism, whereby assisting the operation of the steering means according to the rotation of the steering wheel by the rotation of the electric motor and reducing the driver's burden for steering (see, for example Japanese Patent Application Laid-Open No. 2005-319971).

In order to reduce the size of the electric power steering apparatus, the reduction gear mechanism uses a pair of mutually meshing spur gears or a pair of mutually meshing helical gears with their shafts arranged parallel to each other, which has higher power transmission efficiency compared to worm gears. The smaller gear of the gear pair is connected to the output shaft of the electric motor and the larger gear is connected to the output shaft so that the torque generated by the electric motor is transmitted from the smaller gear to the larger gear, and the output shaft is rotated after reducing the gear ratio to a predetermined reduction gear ratio.

### SUMMARY

By the way, in the electric power steering apparatus comprising the reduction gear mechanism, when the torque generated by the electric motor is transmitted from the smaller gear to the larger gear to assist steering, the surfaces of teeth of the smaller gear and larger gear are in contact with each other, and therefore rattling noise is not generated. However, rattling noise is generated when the steering assist direction is switched by turning, the smaller gear is rotated reversely and a relative speed is generated between the smaller gear and the larger gear. Moreover, with a reverse input load transmitted from the road surface to the larger gear through steering control wheels, the larger gear is slightly rotated and oscillated, and the surfaces of teeth of the larger gear and smaller gear strike each other and generate rattling noise.

In order to reduce the rattling noise, backlash at the meshing section may be reduced. In this case, the rotation performance of the smaller gear and larger gear deteriorates, and the power transmission efficiency is decreased.

In reduction gear mechanisms having mutually meshing worm gears with their shafts arranged at a right angle, as described in Japanese Patent Applications Laid-Open Nos. 2004-332921 and 2004-26102, an auxiliary worm wheel which meshes with the worm is separately provided in addition to a worm wheel, or the worm wheel is divided to reduce backlash at the meshing section. However, in both cases, since the backlash is reduced, the rotation performance of the worm gear deteriorates, and the power transmission efficiency is decreased.

In view of the above-described circumstances, and it is a main object to provide a reduction gear mechanism and an electric power steering apparatus, which enable a reduction of rattling noise without reducing backlash at the meshing section in the reduction gear mechanism including mutually meshing smaller gear and larger gear with their shafts arranged parallel to each other.

Another object is to provide a reduction gear mechanism and an electric power steering apparatus, which enable a reduction of rattling noise even when transmission torque is applied from the larger gear side to the larger gear and also when transmission torque is applied from the smaller gear side to the smaller gear.

These objects are achieved by a reduction gear mechanism according to claim 1, and by an electric power steering apparatus according to claim 4.

A reduction gear mechanism according to a first further aspect is characterized in that the first and second rotors are in contact with each other at their circumferential surfaces.

A reduction gear mechanism according to a second further aspect is characterized in that at least one of the first and second rotors is made of a resilient material.

An electric power steering apparatus according to a third further aspect is characterized by comprising any one of the reduction gear mechanisms according to the above aspects, wherein the smaller gear is connected to an electric motor and the larger gear is connected to steering means, and steering is assisted by rotation of the electric motor.

According to the invention, when a relative speed is generated between the smaller gear and the larger gear, the means for decreasing the relative speed applies resistance, and therefore it is possible to decrease the relative speed and reduce rattling noise. Moreover, since the rattling noise is reduced, in other words, backlash is ensured by decreasing the relative speed between the smaller gear and larger gear, it is possible to ensure high rotation performance of the smaller gear and larger gear, it is also possible to relax the precision required for the dimensions of the smaller gear, larger gear, and support members for supporting the gears, and it is possible to reduce costs. Further, since it is possible to reduce rattling noise irrespectively of the material of the smaller gear and larger gear, the smaller gear and larger gear can be made of metal to increase rigidity.

According to the invention, since resistance according to the transmission torque applied to the smaller gear and larger gear can be applied to the relative rotation between the smaller gear and larger gear, even when the relative speed between the smaller gear and larger gear is relatively fast, or relatively low, it is possible to decrease the relative speed and reduce rattling noise.

According to the invention, since the means for decreasing the relative speed is constructed by providing the first rotor which rotates together with the smaller gear and the second rotor which rotates together with the larger gear, it is possible to produce the reduction gear mechanism in relatively small size at low costs.

According to the first further aspect, by forming the first rotor with almost the same diameter as the meshing pitch circle of the smaller gear and forming the second rotor with almost the same diameter as the meshing pitch circle of the larger gear, it is possible to bring them into contact with each other and turn them at a reduction gear ratio equal to the reduction gear ratio between the smaller gear and larger gear, and it is possible to ensure high rotation performance of the smaller gear and larger gear.

According to the invention, by adding the third rotor and the resistor, it is possible to construct the resistance section for applying resistance according to the transmission torque applied to the smaller gear and larger gear to the relative rotation between the smaller gear and larger gear, and thus it is possible to produce the reduction gear mechanism having the resistance section in relatively small size at low costs.

According to the second further aspect, even when the support members for supporting the smaller gear and larger gear expand thermally, it is possible to maintain the contact state between the first and second rotors, and it is possible to reduce rattling noise without being influenced by thermal expansion.

According to the third further aspect, it is possible to prevent rattling noise from being generated when the steering assisting direction is switched by turning and when a reverse input load is applied to the larger gear.

The above and further objects and features will more fully be apparent from the following detailed description with accompanying drawings.

### BRIEF DESCRIPTION OF THE SEVERAL VIEWS OF THE DRAWINGS

FIG. 1 is a schematic view showing the structure of a reduction gear mechanism;
FIG. 2 is a schematic view showing other structures of essential sections of the reduction gear mechanism;
FIG. 3 is a schematic view showing a structure of an inventive reduction gear mechanism;
FIG. 4 is a schematic view showing still another structure of a reduction gear mechanism; and
FIG. 5 is a cross sectional view showing the structure of an electric power steering apparatus.

### DETAILED DESCRIPTION

The following description will explain the present embodiment based on the drawings.

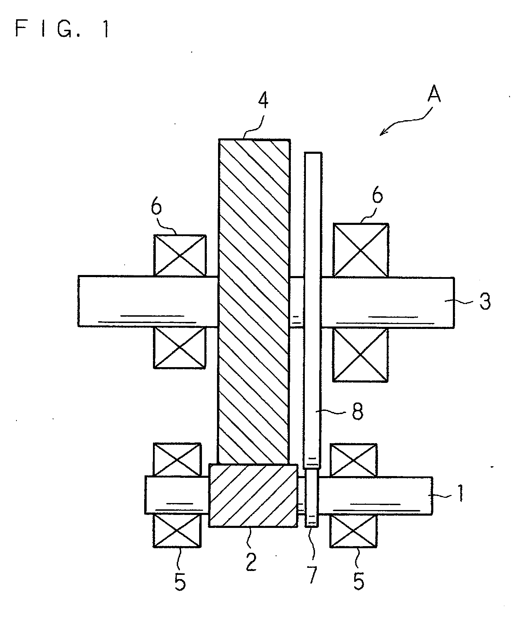

FIG. 1 is a schematic view showing the structure of a reduction gear mechanism not forming part of the invention.

The reduction gear mechanism comprises a smaller gear 2 including a first shaft 1; a larger gear 4 having a second shaft 3 parallel to the first shaft 1 and meshing with the smaller gear 2; first bearings 5 and 5 for dual-supporting the smaller gear 2; second bearings 6 and 6 for dual-supporting the larger gear 4; a first rotor 7 with a small diameter attached to the first shaft 1; and a second rotor 8 with a large diameter attached to the second shaft 3 and in contact with the circumferential surface of the first rotor 7.

The smaller gear 2 and larger gear 4 are composed of metal helical gears. For the meshing section between the smaller gear 2 and larger gear 4, suitable backlash is provided to achieve high rotation performance.

The first and second rotors 7 and 8 construct means (for example, resistance adding means) for decreasing a relative speed when the relative speed is generated between the smaller gear 2 and larger gear 4. The first rotor 7 is composed of a metal small-diameter disk having almost the same diameter as the meshing pitch circle of the smaller gear 2, the second rotor 8 is composed of a metal large-diameter disk having almost the same diameter as the meshing pitch circle of the larger gear 4, and their circumferential surfaces come into contact with each other at almost the same reduction gear ratio as the reduction gear ratio between the smaller gear 2 and larger gear 4. The first rotor 7 is externally fitted and fixed to the first shaft 1, and the second rotor 8 is externally fitted and fixed to the second shaft 3.

Note that, instead of making the first and second rotors 7 and 8 from a metal material, one of them may be made of a metal material and the other may be made of a resilient material such as a synthetic resin and synthetic rubber. Alternatively, both of them may be made of a resilient material such as a synthetic resin and synthetic rubber, or may be composed of a metal core body and a resilient ring covering the outer circumference of the metal core body.

The reduction gear mechanism constructed as described above has the first shaft 1 with one end connected to the drive source, such as an electric motor, and the second shaft 3 connected to the driven side, so that the torque of the drive source is increased and transmitted to the second shaft 3.

When the smaller gear 2 is rotated in one direction, the tooth surface of the smaller gear 2 comes into contact with the tooth surface of the larger gear 4, and the larger gear 4 is rotated in the opposite direction in an interlocked manner. Moreover, the first and second rotors 7 and 8 turn in mutually opposite directions in a state in which their circumferential surfaces are in contact with each other, and a relative speed is not generated between these two rotors.

When one of the smaller gear 2 and larger gear 4 is reversely rotated and a relative speed is generated between the smaller gear 2 and larger gear 4 with the rotation corresponding to the backlash, one of the first and second rotors 7 and 8 is rotated reversely with respect to the other in a state in which their circumferential surfaces are in contact with each other, and relative sliding occurs between the first and second rotors 7 and 8. Friction force caused by the relative sliding is applied to one of the smaller gear 2 and larger gear 4, and resistance is applied to the one gear rotating in the reverse direction. Thus, it is possible to decrease the relative speed of one of the smaller gear 2 and larger gear 4, it is possible to prevent the surfaces of teeth of the smaller gear 2 and larger gear 4 from coming into strong contact with each other in the reverse rotation direction, and it is possible to reduce rattling noise.

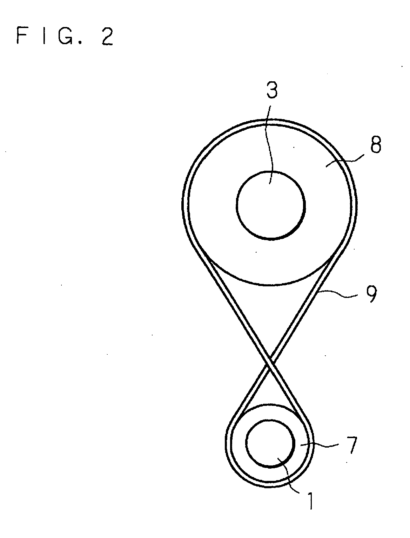

FIG. 2 is a schematic view showing other structures of a reduction gear mechanism not forming part of the invention. In the reduction gear mechanism shown in FIG. 2, an endless belt 9 is put in a crossed pattern on the circumferential surfaces of the first and second rotors 7 and 8, instead of bringing the circumferential surfaces of the first and second rotors 7 and 8 into contact with each other.

When the smaller gear 2 is rotated in one direction and the smaller gear 2 and larger gear 4 are rotated in mutually opposite directions in an interlocked manner, the torque of the first rotor 7 is transmitted from the belt 9 to the second rotor 8 without generating relative sliding between the belt 9 and the first and second rotors 7 and 8. The two rotors 7 and 8 rotate in mutually opposite directions, and a relative speed is not generated between the two rotors 7 and 8.

When one of the smaller gear 2 and larger gear 4 is rotated reversely and a relative speed is generated between the smaller gear 2 and larger gear 4 with the rotation corresponding to the backlash, relative sliding occurs between the belt 9 and one of the first and second rotors 7 and 8. Friction force caused by the relative sliding is applied to one of the smaller gear 2 and larger gear 4, and resistance is applied to the one gear rotating in the reverse direction. Thus, it is possible to decrease the relative speed of one of the smaller gear 2 and larger gear 4, it is possible to prevent the surfaces of teeth of the smaller gear 2 and larger gear 4 from coming into strong contact with each other in the reverse rotation direction, and it is possible to reduce rattling noise.

Since other structures and functions are the same as those in Embodiment 1, the detailed explanations thereof and the explanations of the functions and effects will be omitted by assigning the same codes to the same parts.

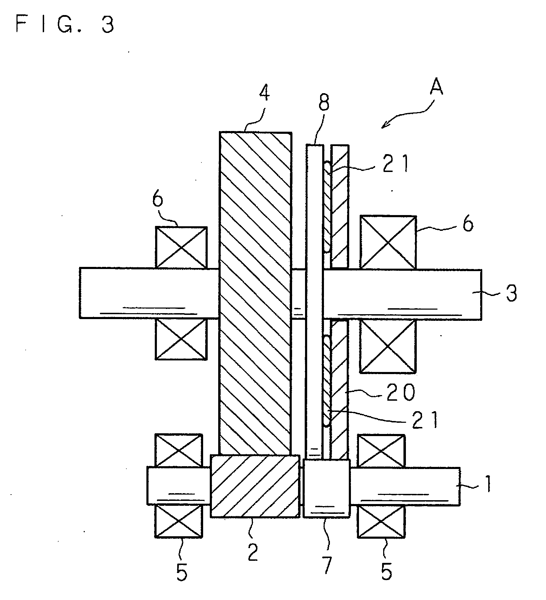

FIG. 3 is a schematic view showing one embodiment of an inventive reduction gear mechanism. In addition to the reduction gear mechanism of Fig. 1, the reduction gear mechanism shown in FIG. 3 further comprises a third rotor 20 which faces the second rotor 8 in the axial direction and is in contact with the circumferential surface of the first rotor 7; and a resistor 21 such as a viscous material which is interposed between the second and third rotors 8 and 20 to apply resistance to the relative rotation between the second and third rotors 8 and 20. Note that the third rotor 20 and the resistor 21 constitute a resistance section.

The second rotor 8 is fixed to the second shaft 3, and relatively small fictional resistance force is applied between the first and second rotors 7 and 8. The third rotor 20 is composed of a disk having almost the same diameter as the second rotor 8 and loosely fitted and supported on the second shaft 3 to permit relative rotation, and larger sliding friction resistance force (about twice larger sliding friction resistance force) than the sliding friction resistance force between the first and second rotors 7 and 8 is applied between the third rotor 20 and the first rotor 7. Moreover, movement of the third rotor 20 in one direction along the axial direction is restricted, and a fixed distance is maintained between the second and third rotors 8 and 20.

The resistor 21 is made of a viscous material in the form of gel with relatively high viscosity such as a lubricant oil, in contact, or close contact, with mutually facing one side surfaces of the second and third rotors 8 and 20, and applies resistance to the relative rotation between the second and third rotors 8 and 20 by the viscous force. Note that the resistor 21 is formed in the shape of a disk.

When the smaller gear 2 is rotated in one direction, the tooth surface of the smaller gear 2 comes into contact with the tooth surface of the larger gear 4, and the larger gear 4 is rotated in the opposite direction in an interlocked manner. Moreover, the first rotor 7 and the second and third rotors 8 and 20 are turned in mutually opposite directions in a state in which their circumferential surfaces are in contact with each other, and a relative speed is not generated between the first rotor 7 and the second and third rotors 8 and 20.

When one of the smaller gear 2 and larger gear 4 is rotated reversely and a relative speed is generated between the smaller gear 2 and larger gear 4 with the rotation corresponding to the backlash, the second and third rotors 8 and 20 rotate relative to each other with the resistor 21 therebetween according to the relative speed, in other words, the magnitude of transmission torque generated by the relative speed, and resistance is applied to the one gear rotating in the reverse direction. For example, when relatively small transmission torque is applied to the larger gear 4 and the larger gear 4 is rotated reversely at a relatively low speed, the second rotor 8 reversely rotates together with the larger gear 4 due to the difference in the sliding friction resistance force, but the third rotor 20 does not rotate because of the sliding friction resistance force and overcomes the resistance of the resistor 21. Consequently, the second and third rotors 8 and 20 rotate relative to each other. Therefore, relative sliding occurs between the first and second rotors 7 and 8, friction force due to the relative sliding is applied to the larger gear 4, and resistance is applied to the reverse rotation of the larger gear 4. On the other hand, when relatively large transmission torque is applied to the smaller gear 2 and the smaller gear 2 is rotated reversely at a relatively high speed, relative sliding occurs between the first and third rotors 7 and 20 due to the sliding friction resistance force of the third rotor 20. Then, friction force caused by the relative sliding is applied to the smaller gear 2, and resistance is applied to the reverse rotation of the smaller gear 2. Thus, it is possible to decrease the relative speed of one of the smaller gear 2 and the larger gear 4 without being influenced by the difference in the speed when the smaller gear 2 and the larger gear 4 are rotated relatively in opposite directions, it is possible to prevent the surfaces of teeth of the smaller gear 2 and larger gear 4 from coming into strong contact with each other in the reverse rotation direction, and it is possible to reduce rattling noise.

Since other structures and functions are the same as those in the reduction gear mechanism of Fig. 1, the detailed explanations thereof and the explanations of the function and effects will be omitted by assigning the same codes to the same parts.

Note that the third rotor 20 may be made of a resilient material such as a synthetic resin and synthetic rubber, instead of a metal material, or may be composed of a metal core body and a resilient ring covering the outer circumference of the metal core body.

The resistor 21 may be constructed by putting a lubricant oil of relatively low viscosity between the second and third rotors 8 and 20 and sealing it with a seal material, or made of a resilient material such as a plate spring and a spring coil, instead of a viscous material in the form of gel.

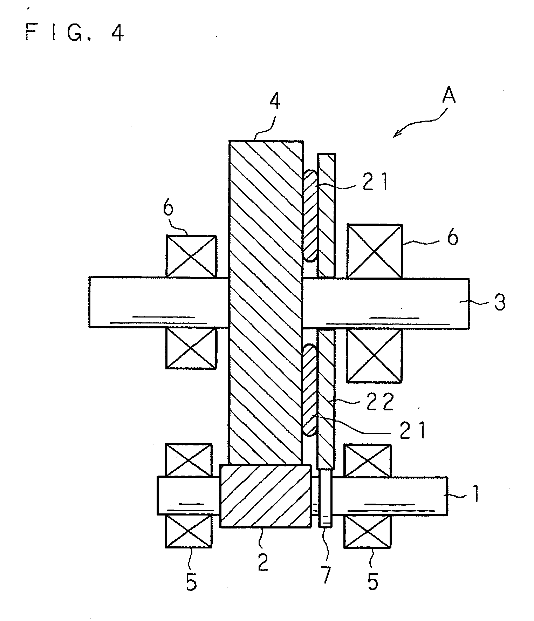

FIG. 4 is a schematic view showing still another structure of a reduction gear mechanism not forming part of the invention. The reduction gear mechanism shown in FIG. 4 further comprises a fourth rotor 22 which faces the larger gear 4 in the axial direction and is in contact with the circumferential surface of the first rotor 7; and a resistor 21 such as a viscous material which is interposed between the larger gear 4 and fourth rotor 22 to apply resistance to the relative rotation between the larger gear 4 and the fourth rotor 22, without the second rotor 8 in Fig. 1. Note that the fourth rotor 22 and the resistor 21 constitute a resistance section.

The fourth rotor 22 is composed of a disk having almost the same diameter as the larger gear 4 and loosely fitted and supported on the second shaft 3 to permit relative rotation, and relatively large fictional resistance force is applied between the first and fourth rotors 7 and 22. Movement of the fourth rotor 22 in one direction along the axial direction is restricted, and a fixed distance is maintained between the larger gear 4 and the fourth rotor 22.

The resistor 21, is made of a viscous material in the form of gel having a relatively high viscosity such as a lubricant oil, in contact, or close contact, with mutually facing one side surfaces of the larger gear 4 and the fourth rotor 22, and applies resistance to the relative rotation between the larger gear 4 and the fourth rotor 22 by the viscous force. Note that the resistor 21 is formed in the shape of a disk.

When the smaller gear 2 is rotated in one direction, the tooth surface of the smaller gear 2 comes into contact with the tooth surface of the larger gear 4, and the larger gear 4 is rotated in the opposite direction in an interlocked manner. Moreover, the first rotor 7 and the fourth rotor 22 are turned in mutually opposite directions in a state in which their circumferential surfaces are in contact with each other, and a relative speed is not generated between the first and fourth rotors 7 and 22.

When one of the smaller gear 2 and larger gear 4 is rotated reversely and a relative speed is generated between the smaller gear 2 and larger gear 4 with the rotation corresponding to the backlash, the larger gear 4 and the fourth rotor 22 rotate relative to each other with the resistor 21 therebetween according to the relative speed, in other words, the magnitude of transmission torque generated by the relative speed, and then resistance is applied to the one gear rotating in the reverse direction. For example, when relatively small transmission torque is applied to the larger gear 4 and the larger gear 4 is rotated reversely at a relatively low speed, the fourth rotor 22 is not rotated because of the sliding friction resistance force and overcomes the resistance of the resistor 21. Consequently, the larger gear 4 is rotated reversely with respect to the fourth rotor 22. Therefore, the resistance force caused by the resistor 21 is applied to the reverse rotation of the larger gear 4. On the other hand, when relatively large transmission torque is applied to the smaller gear 2 and the smaller gear 2 is rotated reversely at a relatively high speed, relative sliding occurs between the first and fourth rotors 7 and 22 due to the sliding friction resistance force of the fourth rotor 22. Friction force caused by the relative sliding is applied to the smaller gear 2, and resistance is applied to the reverse rotation of the smaller gear 2. Thus, it is possible to decrease the relative speed of one of the smaller gear 2 and larger gear 4 without being influenced by the difference in the speed when the smaller gear 2 and the larger gear 4 are rotated relatively in opposite directions, it is possible to prevent the surfaces of teeth of the smaller gear 2 and larger gear 4 from coming into strong contact with each other in the reverse rotation direction, and it is possible to reduce rattling noise.

Since other structures and functions are the same as those in Figs. 1 and 3, the detailed explanations thereof and the explanations of the functions and effects will be omitted by assigning the same codes to the same parts.

Note that the fourth rotor, 22 may be made of a resilient material such as a synthetic resin and synthetic rubber, instead of a metal material, or may be composed of a metal core body and a resilient ring covering the outer circumference of the metal core body

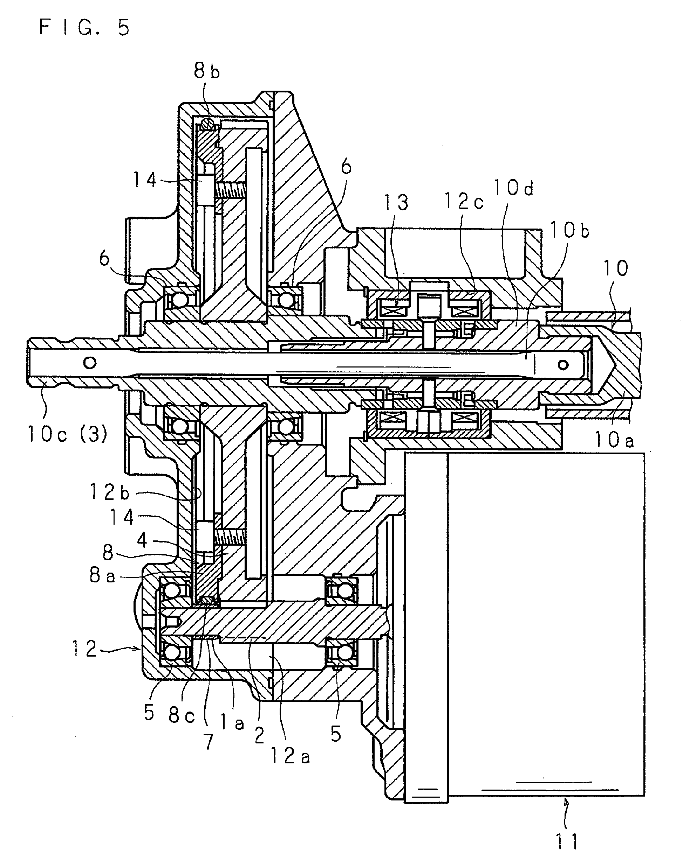

FIG. 5 is a cross sectional view showing the structure of an electric power steering apparatus. The reduction gear mechanisms constructed as described above may be incorporated, for example, into electric power steering apparatuses.

Next, the following will explain about an electric power steering apparatus incorporating the reduction gear mechanism of Fig 1.

This electric power steering apparatus comprises a steering shaft 10 as steering means connected to a steering wheel as an operating member; an electric motor 11 for assisting steering; a reduction gear mechanism A for increasing and adding the torque of the electric motor 11 to the steering shaft 10; a housing 12 as a support member for supporting the reduction gear mechanism A rotatably; and a torque sensor 13 for detecting torque applied to the steering shaft 10 according to the operation of the steering wheel, and is constructed to assist steering by driving the electric motor 11 based on a detection result of the torque sensor 13 and transmitting the torque of the electric motor 11 to the steering shaft 10 through the reduction gear mechanism A.

The steering shaft 10 comprises an upper shaft body 10a with the upper end connected to the steering wheel; a torsion bar 10b connected to the lower end of the upper shaft body 10a; and a lower shaft body 10c connected to the lower end of the torsion bar 10b and connected to, for example, a rack-and-pinion type turning mechanism through a universal joint, and is constructed so that the torsion bar 10b is twisted according to the operation of the steering wheel and steering torque is applied to the upper shaft body 10a and lower shaft body 10c.

Coupled to the lower end of the upper shaft body 10a is a cylindrical part 10d into which the upper end of the torsion bar 10b is inserted. The lower shaft body 10c constitutes the second shaft 3, and is constructed in the form of a cylinder so that the lower end of the torsion bar 10b and an end of the cylindrical part 10d are inserted therein. The torque sensor 13 is arranged around the lower shaft body 10c and the cylindrical part 10d. The larger gear 4 and the bearings 6, 6 are externally fitted to the lower shaft body 10c at the middle so that the larger gear 4 is dual-supported.

The smaller gear 2 is formed by cutting one side of the first shaft 1 with a gear cutter to form the teeth of gear. A fitting section 1a with a diameter equal to or smaller than the base diameter of the smaller gear 2 is provided on one side of the first shaft 1, and the first rotor 7 in the form of a cylinder is externally fitted and fixed to the fitting section 1a. The other side of the first shaft 1 is interlocked and connected to the output shaft of the electric motor 11. Further, the first bearing 5, 5 are externally fitted to both ends of the first shaft 1 so that the smaller gear 2 is dual-supported.

The first rotor 7 is composed of a metal cylinder with an external diameter substantially equal to the meshing pitch circle of the smaller gear 2, and is sandwiched between the smaller gear 2 and the first bearing 5.

The larger gear 4 has a fitting hole to be fitted to the lower shaft body 10c in the middle, and the second rotor 8 with an external diameter approximate to the meshing pitch circle of the larger gear 4 is attached to one side surface with a plurality of bolts 14.

The second rotor 8 comprises a metal core ring 8a having a ring-like groove 8b in the outer circumferential surface, and a resilient ring 8c which is fitted to the ring-like groove 8b of the core ring 8a, and whose outer circumferential surface is in contact with the circumferential surface of the first rotor 7. The resilient ring 8c is slightly bent in a radial direction and in contact with the circumferential surface of the first rotor 7.

The housing 12 comprises a first storage section 12a for storing the smaller gear 2 and the first shaft 1; a second storage section 12b, connected to the first storage section 12a through a connection hole, for storing the larger gear 4 and the lower shaft body 10c; and a third storage section 12c, connected to the second storage section 12b, for storing the torque sensor 1.3, and has the electric motor 11 detachably attached to the opening of the first storage section 12a.

In the electric power steering apparatus thus constructed, the upper shaft body 10a rotates in one direction, or the other direction, according to the operation of the steering wheel, the electric motor 11 is driven based on a detection result of the torque sensor 13, and the torque of the electric motor 11 is transmitted to the lower shaft body 10c through the first shaft 1, smaller gear 2 and larger gear 4, thereby assisting steering. At this time, a relative speed is not generated between the smaller gear 2 and the larger gear 4.

When the steering assisting direction is switched by turning and the smaller gear 2 is rotated reversely, a relative speed is generated between the smaller gear 2 and the larger gear 4, and simultaneously the first rotor 7 rotates reversely together with the smaller gear 2. However, since friction resistance force generated by the contact with the second rotor 8 is applied to the first rotor 7, it is possible to apply resistance to the reversely rotating first rotor 7 by the friction resistance force, it is possible to decrease the relative speed of the smaller gear 2, and it is possible to reduce rattling noise.

When a reverse input load is applied from the road surface to the larger gear 4 through the steering control wheels and the lower shaft body 10c and the larger gear 4 is rotated and oscillated slightly with respect to the smaller gear 2, a relative speed is generated between the larger gear 4 and the smaller gear 2, and simultaneously the second rotor 8 rotates and oscillates slightly together with the larger gear 4. However, since friction resistance force generated by the contact with the first rotor 7 is applied to the second rotor 8, it is possible to apply resistance to the rotational oscillation of the second rotor 8 by the friction resistance force, it is possible to decrease the relative speed of the larger gear 4, and it is possible to reduce rattling noise.

Moreover, since the second rotor 8 is attached on one side of the larger gear 4, the fitting length of the larger gear 4 with respect to the lower shaft body 10 can be made relatively long without being influenced by the second rotor 8, and it is possible to increase the rigidity of the larger gear 4.

Further, since the second rotor 8 has the resilient ring 8c in contact with the first rotor 7, it is possible to obtain predetermined friction resistance force between the first and second rotors 7 and 8 without highly precisely adjusting the distance between the centers of the support holes for supporting the first and second shafts 1 and 3, and thus it is possible to improve the performance of processing the housing 12, etc.

In the example above, although the power steering apparatus incorporating the reduction gear mechanism of Figs. 1 is explained, it may be possible to construct electric power steering apparatuses incorporating the reduction gear mechanisms of Figs. 2-4 in the same manner as in the embodiment shown in FIG. 5.

An electric power steering apparatus incorporating the inventive reduction gear mechanism of comprises the third rotor 20 and resistor 21 of Fig. 3. Therefore, when a reverse input load is applied, in other words, when relatively small transmission torque is applied from the road surface to the larger gear 4 through the steering control wheels and lower shaft body 10c and the larger gear 4 is rotated and oscillated slightly with respect to the smaller gear 2, a comparatively low relative speed is generated between the larger gear 4 and the smaller gear 2, and simultaneously the second rotor 8 rotates and oscillates slightly together with the larger gear 4. However, since relatively small sliding friction resistance force generated by the contact with the first rotor 7 is applied to the second rotor 8, it is possible to apply resistance to the rotational oscillation of the second rotor 8 by the sliding friction resistance force, it is possible to decrease the relative speed of the larger gear 4, and it is possible to reduce rattling noise.

When the direction of steering assisting force is switched rapidly by turning, relatively large transmission torque is applied to the smaller gear 2 and the smaller gear 2 is rapidly rotated in the reverse direction, relative sliding occurs between the first and third rotors 7 and 20 due to the sliding friction resistance force of the third rotor 20, and friction force caused by the relative sliding is applied to the smaller gear 2. Thus, it is possible to apply resistance to the reverse rotation of the smaller gear 2, it is possible to decrease the relative speed of the smaller gear 2, and it is possible to reduce rattling noise.

An electric power steering apparatus incorporating the reduction gear mechanism of Fig. 4 comprises the fourth rotor 22 and resistor 21. Therefore, when a reverse input load is applied, in other words, when relatively small transmission torque is applied from the road surface to the larger gear 4 through the steering control wheels and lower shaft body 10c and the larger gear 4 is rotated and oscillated slightly with respect to the smaller gear 2, a comparatively low relative speed is generated between the larger gear 4 and the smaller gear 2. However, since relatively small sliding friction resistance force generated by the contact with the first rotor 7 is applied to the fourth rotor 22, it is possible to apply resistance to the rotational oscillation of the second rotor 8 by the sliding friction resistance force, it is possible to decrease the relative speed of the larger gear 4, and it is possible to reduce rattling noise.

When the steering assisting direction is switched rapidly by turning, relatively large transmission torque is applied to the smaller gear 2 and the smaller gear 2 is rapidly rotated in the reverse direction, relative sliding occurs between the first and fourth rotors 7 and 22 due to the sliding friction resistance force of the fourth rotor 22, and friction force caused by the relative sliding is applied to the smaller gear 2. Thus, it is possible to apply resistance to the reverse rotation of the smaller gear 2, it is possible to decrease the relative speed of the smaller gear 2, and it is possible to reduce rattling noise.

Note that the alternatives illustrated above explain the case where one of the smaller gear 2 and the larger gear 4 is rotated reversely. However, even when one of the smaller gear 2 and the larger gear 4 is stopped, or slowed down, and a relative speed is generated between the smaller gear 2 and the larger gear 4, it is possible to decrease the relative speed by the resistance applying means, and it is possible to reduce rattling noise.

Moreover, although the alternatives illustrated above explain the case where the first rotor 7 is fitted to the first shaft 1 and the second rotor 8 is attached on one side of the larger gear 4, the first rotor 7 may be constructed integrally with the first shaft 1 or the smaller gear 2, and the second rotor 8 may be constructed integrally with the larger gear 4.

Further, in the reduction gear mechanisms described above, although the larger gear 4 and the smaller gear 2 are helical gears, they may be gears of other type, such as spur gears.

In addition, the reduction gear mechanism A may be used in apparatuses other than electric power steering apparatuses.

Besides, instead of the structure where the electric motor 1.1 is attached to the lower end of the housing as shown in FIG. 5, an electric power steering apparatus may be constructed such that the steering-assist electric motor is attached to a support member for supporting a turning shaft whose both ends are connected to the steering control wheels, the output shaft of the electric motor is arranged parallel to the turning shaft, and the reduction gear mechanism is mounted between the output shaft and the turning shaft.

## Claims

1. A reduction gear mechanism including mutually meshing smaller gear (2) and larger gear (4) with their shafts (1, 3) arranged parallel to each other, comprising
means for decreasing a relative speed generated between the smaller gear (2) and the larger gear (4), said means comprising
a resistance section for applying resistance according to transmission torque applied to the smaller gear (2) and larger gear (4) to a relative rotation between the smaller gear (2) and larger gear (4),
wherein said means for decreasing the relative speed comprises a first rotor (7) which rotates together with one of the smaller gear (2) and larger gear (4), and a second rotor (8) which rotates together with the other, so as to generate sliding friction between the first rotor (7) and itself,
wherein said means for decreasing the relative speed comprises a third rotor (20) which generates, between one of the first and second rotors (7, 8) and itself, sliding friction resistance force larger than sliding friction resistance force between the first and second rotors (7, 8), and is capable of rotating relative to the other; and a resistor (21) for applying resistance to the relative rotation.

2. The reduction gear mechanism according to claim 1, wherein said first and second rotors (7,8) are in contact with each other at their circumferential surfaces.

3. The reduction gear mechanism according to claim 2, wherein at least one of the first and second rotors (7, 8) is made of a resilient material.

4. An electric power steering apparatus **characterized by** comprising a reduction gear mechanism (A) defined in any one of claims 1 through 3,
wherein said smaller gear (2) is connected to an electric motor (11), said larger gear (4) is connected to steering means (10), and steering is assisted by rotation of the electric motor (11).

## Patentansprüche

1. Untersetzungsgetriebemechanismus mit einem kleineren Zahnrad (2) und einem größeren Zahnrad (4), die miteinander kämmen, wobei deren Wellen (1, 3) zueinander parallel angeordnet sind, mit
einer Einrichtung zum Verringern der Relativgeschwindigkeit, welche zwischen dem kleineren Zahnrad (2) und dem größeren Zahnrad (4) erzeugt wird, wobei die Einrichtung aufweist
einen Widerstandsabschnitt zum Aufbringen eines dem auf das kleinere Zahnrad (2) und das größere Zahnrad (4) aufgebrachten Getriebedrehmoments entsprechenden Widerstands gegen eine Relativdrehung zwischen dem kleineren Zahnrad (2) und dem größeren Zahnrad (4),
wobei die Einrichtung zum Verringern der Relativgeschwindigkeit einen ersten Rotor (7), der zusammen mit entweder dem kleineren Zahnrad (2) oder dem größeren Zahnrad (4) dreht, und einen zweiten Rotor (8) aufweist, welcher zusammen mit dem anderen Zahnrad dreht, um so Gleitreibung zwischen dem ersten Rotor (7) und sich selbst zu erzeugen,
wobei die Einrichtung zum Verringern der Relativgeschwindigkeit einen dritten Rotor (20) aufweist, welcher zwischen dem ersten oder dem zweiten Rotor (7, 8) und sich selbst eine Gleitreibungswiderstandskraft erzeugt, die größer als die Gleitreibungswiderstandskraft zwischen dem ersten und dem zweiten Rotor (7, 8) ist, und welcher in der Lage ist, relativ zu dem anderen zu drehen; und einen Widerstand (21) zum Aufbringen von Widerstand gegen die Relativdrehung aufweist.

2. Untersetzungsgetriebemechanismus nach Anspruch 1, bei dem der erste und der zweite Rotor (7, 8) an ihren Umfangsflächen miteinander in Kontakt stehen.

3. Untersetzungsgetriebemechanismus nach Anspruch 2, bei dem der ersten und/oder der zweite Rotor (7, 8) ais einem elastischen Material besteht.

4. Elektrische Servolenkvorrichtung, **dadurch gekennzeichnet, dass** sie einen Untersetzungsgetriebemechanismus (A) nach einem der Ansprüche 1 bis 3 aufweist,
wobei das kleinere Zahnrad (2) mit einem Elektromotor (11) verbunden ist, das größere Zahnrad (4) mit einer Lenkeinrichtung (10) verbunden ist, und das Lenken durch die Drehung des Elektromotors (11) unterstützt wird.

## Revendications

1. Mécanisme de réduction d'engrenage avec un pignon petit (2) et un pignon grand (4), en engrenage l'un avec l'autre, leurs arbres (1, 3) étant parallèles l'un à l'autre, comprenant
un moyen pour réduire la vitesse relative générée entre le pignon petit (2) et le pignon grand (4), ledit moyen comprenant
une partie de résistance pour appliquer de résistance contre la rotation relative entre le pignon petit (2) et le pignon grand (4), la résistance correspondant au couple de transmission appliqué audit pignon petit (2) et audit pignon grand (4),
le moyen pour réduire la vitesse relative comprenant un premier rotor (7) en rotation avec ledit pignon petit (2) ou ledit pignon grand (4), et un deuxième rotor (8) en rotation avec l'autre, afin de générer de friction de glissement entre ledit premier rotor (7) et lui même,
le moyen pour réduire la vitesse relative comprenant un troisième rotor (20) générant, entre le premier ou le deuxième rotor (7, 8) et lui même, une force de résistance par friction de glissement qui est supérieure à la force de résistance par friction de glissement entre le premier et le deuxième rotor (7, 8), et qui est apte à tourner par rapport à l'autre rotor; et une résistance (21) pour fournir de la résistance contre la rotation relative.

2. Mécanisme de réduction d'engrenage selon la revendication 1, dans lequel lesdits premier et deuxième rotors (7, 8) sont en contact l'un avec l'autre par leurs faces périphériques.

3. Mécanisme de réduction d'engrenage selon la revendication 1, dans lequel au moins le premier ou le deuxième rotor (7, 8) est fabriqué d'un matériau résilient.

4. Dispositif électrique de direction assisté, **caractérisé par** comprenant un mécanisme de réduction d'engrenage (A) selon l'une quelconque des revendications 1 à 3, dans lequel ledit pignon petit (2) est raccordé à un moteur électrique (11), ledit pignon grand (4) est raccordé à un moyen de direction (10), et la direction est assistée par la rotation dudit moteur électrique (11).
